# EUROPEAN PATENT APPLICATION

(11) **EP 1 536 177 A1**
(43) Date of publication of application: **01.06.2005**
(21) Application number: 04003003.3
(22) Date of filing: 11.02.2004
(51) Int. Cl.: F16M 11/10, B23Q 1/76, B23B 29/16, B23B 13/12

(54) **Retention fixture, particularly for retaining extrusion and drawing dies to be subjected to finishing operations**

(30) Priority: 31.10.2003 IT MI20032111
(71) Applicant: Compes S.p.A., 25050 Rodengo Saiano (Brescia) (IT)
(72) Inventor: Pedersoli, Mario, 25050 Rodengo Saiano (Brescia) (IT)
(74) Representative: Modiano, Guido, Dr.-Ing.

(57) **Abstract**

A retention fixture, particularly for retaining extrusion and drawing dies to be subjected to finishing operations, comprising, on a supporting surface (5), a concave region (10) that is provided with at least one pair of rollers (21) that have a fixed axis and can be arranged at the circumferential peripheral region of a die (20) that is introduced in the concave region (10), arms (30) for preventing tipping are provided which can engage detachably the die (20) outside the concave region (10), and means (22, 23) for rotating the die (20) about its own axis are also provided.

## Description

The present invention relates to a retention fixture, particularly for retaining extrusion and drawing dies to be subjected to finishing operations.

As is known, in circular extrusion and drawing dies it is necessary to perform final operations for correction and finishing that must be performed directly on the die.

The die usually has a considerable weight and its handling becomes difficult, and currently problems are encountered in keeping the die in position for performing the various finishing or correcting operations.

Furthermore, since it is not possible to handle the die easily, the operator unavoidably has to work in awkward conditions, which in addition to increasing working times also affects the quality of the work.

The aim of the invention is to solve the problem described above by providing a retention fixture, particularly for retaining extrusion and drawing dies to be subjected to finishing operations, that allows to support the die and retain it in position with the possibility to handle it without having to apply intense forces.

Within this aim, an object of the invention is to provide a fixture that allows the operator to arrange the fixture in the position that he deems ideal, accordingly allowing to perform work in the best conditions.

Another object of the present invention is to provide a fixture that can easily adapt to various die diameters without requiring modifications to such fixture.

Another object of the present invention is to provide a retention fixture, particularly for retaining extrusion and drawing dies, that thanks to its particular constructive characteristics is capable of giving the greatest assurances of reliability and safety in use and is also competitive from a merely economical standpoint.

This aim and these and other objects that will become better apparent hereinafter are achieved by a retention fixture, particularly for retaining extrusion and drawing dies to be subjected to finishing operations, according to the invention, characterized in that it comprises, on a supporting surface, a concave region that is provided with at least one pair of rollers that have a fixed axis and can be arranged at the circumferential peripheral region of a die that is introduced in said concave region, arms for preventing tipping being able to engage detachably said die outside said concave region, means being further provided for rotating said die about its own axis.

Further characteristics and advantages of the invention will become better apparent from the description of a preferred but not exclusive embodiment of a retention fixture, particularly for retaining extrusion and drawing dies to be subjected to finishing operations, illustrated by way of non-limiting example in the accompanying drawings, wherein:

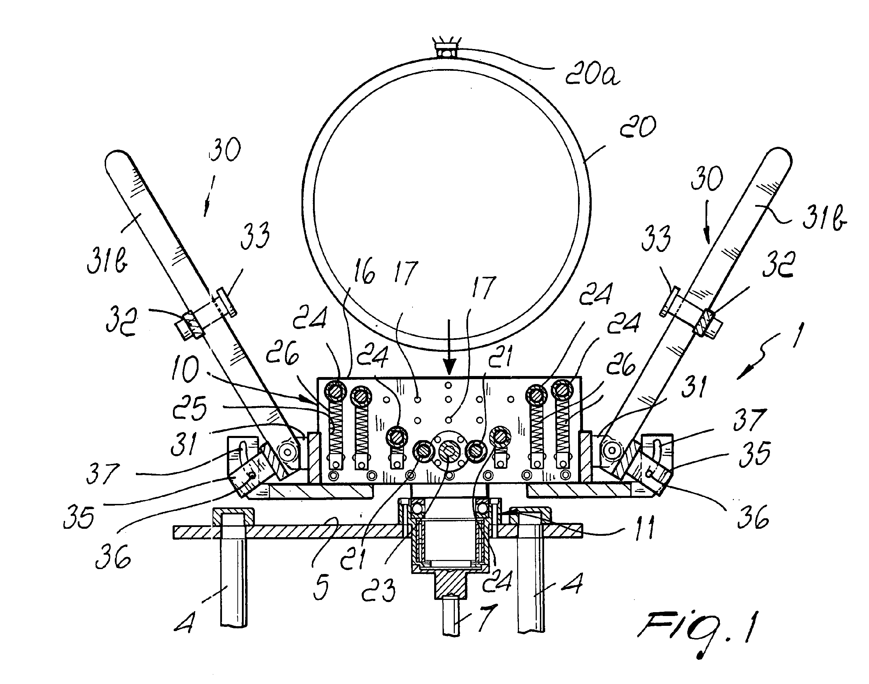

Figure 1 is a schematic view of a detail of the fixture during the positioning of a die;

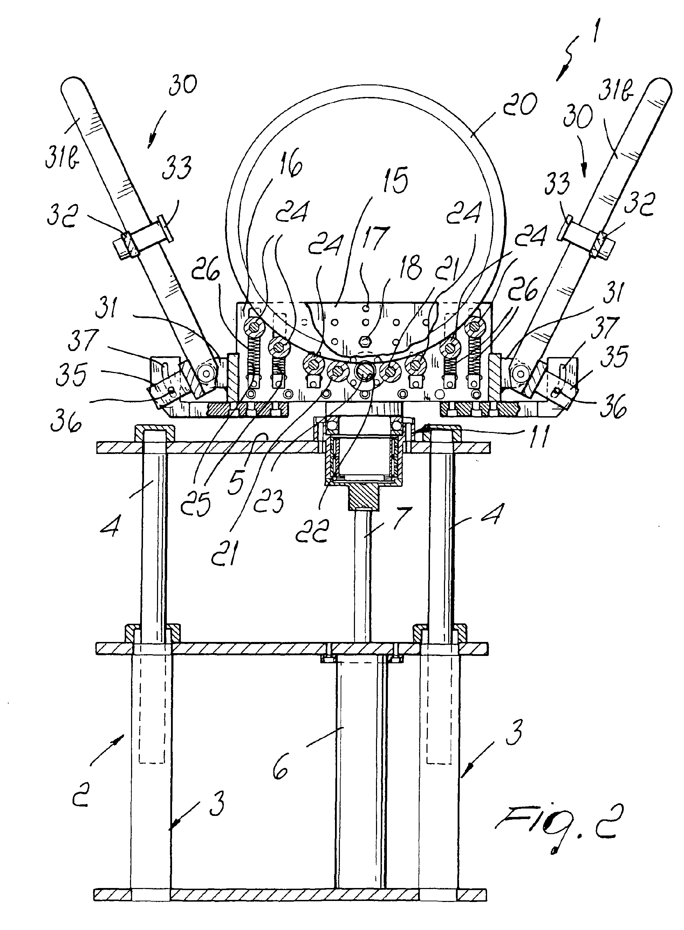

Figure 2 is a partially cutout view of the fixture during the initial positioning step;

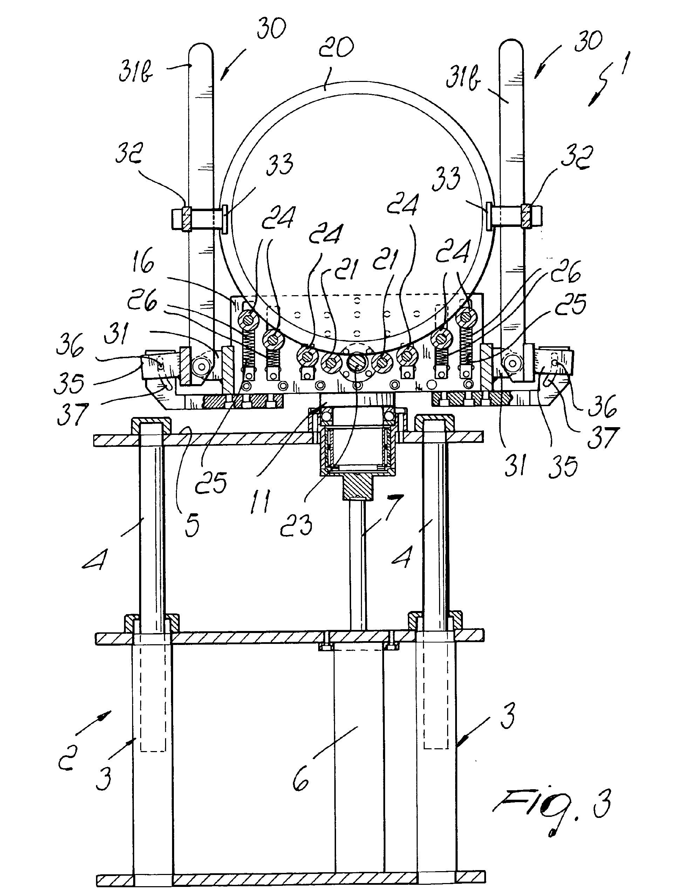

Figure 3 is a partially sectional view of the fixture after the die has been positioned;

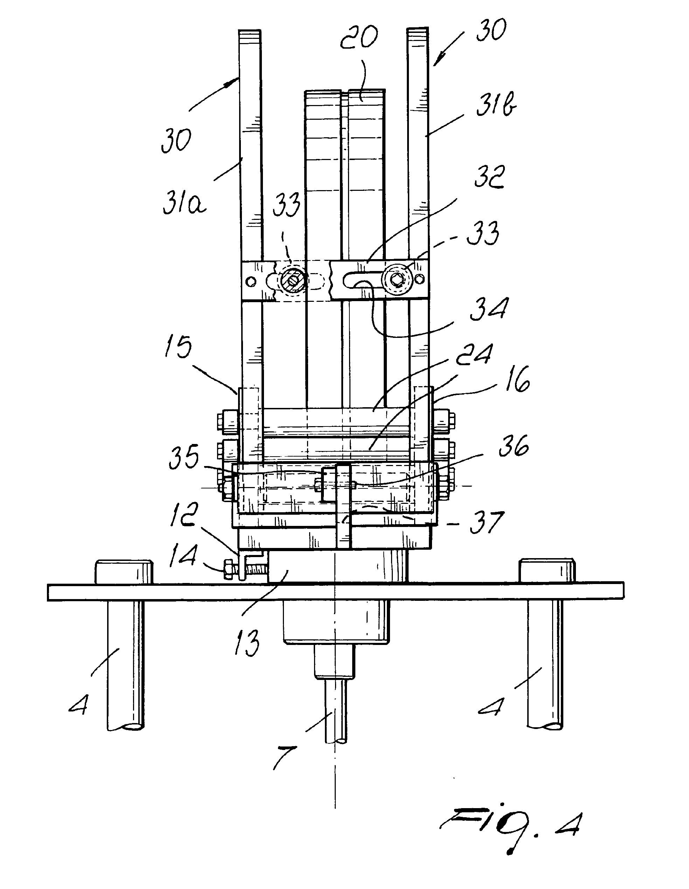

Figure 4 is a side elevation view of the fixture, illustrating the arms for preventing tipping;

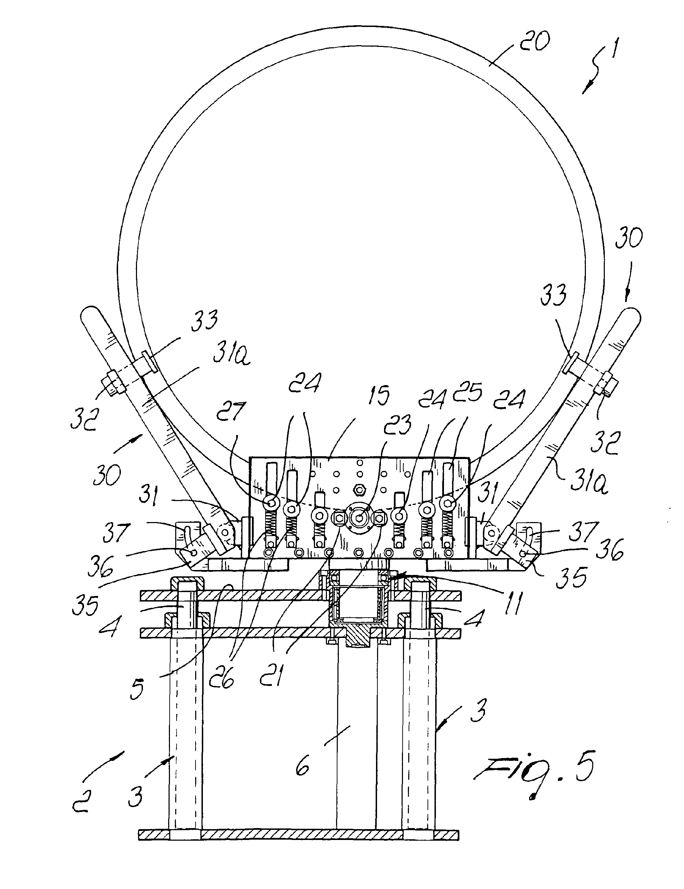

Figure 5 is a schematic view of the fixture with a die having a larger diameter applied thereto.

With reference to the figures, the retention fixture, particularly for retaining extrusion and drawing dies to be subjected to finishing operations, according to the invention, generally designated by the reference numeral 1, comprises a supporting framework that is generally designated by the reference numeral 2 and has a base frame 3 to which an upper frame 4 is connected; said upper frame is associated telescopically with the means for vertical adjustment in order to position the supporting surface 5 of the upper frame 4 at the selected level.

In order to achieve telescopic movement of the upper frame 4 with respect to the base frame 3, the vertical adjustment means is a cylinder 6, which is connected to the frame 3 and has a stem 7 that engages the supporting surface 5.

The fixture further comprises a concave region, generally designated by the reference numeral 10, which is connected to the supporting surface 5 by interposing a rotary joint, generally designated by the reference numeral 11, which allows rotation about a substantially vertical axis.

In order to fix the angular position, means are provided such as an L-shaped element 12 is connected to the concave region 10 and engages the fixed part 13 of the rotary joint by means of a positioning bolt 14 that is connected to the L-shaped element 12.

The concave region 10 is advantageously provided by means of a front plate 15 and a rear plate 16, which are spaced one another and are provided with a plurality of positioning holes 17 that allow to insert an initial locking bolt 18 that retains in position the die 20 in the initial steps for connection to the fixture.

In the concave region 10 there are two rollers 21 that have a fixed axis and are arranged in the central region; the means for rotating the die 20 about its own axis are arranged between said rollers and are advantageously constituted by a rubber roller 22 that is connected to a front actuation shank 23 that can be actuated by means of a crank or other tool in order to turn the die about its axis.

To the side of the fixed rollers 21 there is a plurality of movable rollers, generally designated by the reference numeral 24, that can slide in vertical slots 25 formed by the plates 15 and 16 and are pushed by compensation springs 26.

The rollers 24 are designed to engage the peripheral region of the die 20 and can be locked in position by acting on locking means such as the end bolts 27 that allow their locking in position.

Furthermore, the fixture comprises arms for preventing tipping, designated by the reference numeral 30, which are pivoted in a downward region to lugs 31 that are associated with the concave region 10. The arms 30, which are provided in a region that lies outside the region affected by the die 20, have a front arm 31a and a rear arm 31b, which are joined by cross-members 32, which support rollers 33 for engaging the front faces of the die.

The cross-members 32 are provided with slots 34 that allow to position and lock in the preset position the rollers 33, which are therefore made to engage the faces of the die.

The arms 30 can be locked in the preset position by means of an angular portion 35, which is arranged substantially at right angles to the arms 30 at its region for pivoting to the lugs 31 and has a fixing bolt 36 that can engage a positioning slot 37 formed monolithically with the concave region 10.

The arms 30 are positioned according to the diameter of the die so that the bearings or rollers 33 that they support engage the front and rear faces of the die, which is therefore retained without the possibility to tip.

With the described fixture, the operator initially positions the supporting surface 5 at the selected height by acting on the cylinder 6.

Then the die 20 is positioned in the concave region 10, and while the die is supported by means of the suspension hook 20a, which is then removed, the die is initially retained by inserting the locking bolt 18, which is passed through the front plate 15 and the rear plate 16 of the concave region 10.

After this preliminary maneuver has been performed, the arms 30 for preventing tipping are positioned so that the rollers or bearings 33 engage the peripheral region of the die.

Furthermore, the plurality of rollers 24 with movable axes are fixed in position, so that the die is supported along a certain circumferential portion and is retained outside the concave region by the bearings 33.

Once these preliminary operations have been performed, the bolt 18 is removed so that the die can be turned about its own axis by acting on the rubber roller 23 that allows to turn the die about its own axis through an angle of 360°.

Furthermore, it is possible to move the die about a vertical axis by using the presence of the rotary joint 11 that allows to rotate said die and to fix it in the chosen position.

With the fixture described above it is therefore evident that the operator can position the die in the most convenient position and at the most convenient level, thus being able to work on said die for correction and finishing operations in optimum conditions and without running any risk, since said die is firmly retained by the fixture, which allows it to assume all the intended positions.

From what has been described above it is therefore evident that the invention achieves the intended aim and objects, and in particular the fact is stressed that the present structure allows to use the fixture with dies that have diameters comprised within a vast range, for example from 500 to 1200 mm, being always able to provide adequate and correct support for the die.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2003A002111 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A retention fixture, particularly for retaining extrusion and drawing dies to be subjected to finishing operations, **characterized in that** it comprises, on a supporting surface (5), a concave region (10) that is provided with at least one pair of rollers (21) that have a fixed axis and can be arranged at the circumferential peripheral region of a die (20) that is introduced in said concave region (10), arms (30) for preventing tipping being able to engage detachably said die (20) outside said concave region (10), means (22, 23) being further provided for rotating said die (20) about its own axis.

2. The fixture according to claim 1, **characterized in that** it comprises a supporting framework (2) that is provided with a base frame (3) to which an upper frame (4) is connected by interposing means (6, 7) for the vertical adjustment of the position of said supporting surface (5) formed by said upper frame (4).

3. The fixture according to the preceding claims, **characterized in that** said adjustment means comprise a cylinder (6) that is connected to said base frame (3) and from which a stem (7) protrudes, said stem (7) engaging said supporting surface (5).

4. The fixture according to one or more of the preceding claims, **characterized in that** it comprises a rotary joint (11) that is interposed between said supporting surface (5) and said concave region (10) for rotation about a substantially vertical axis.

5. The fixture according to one or more of the preceding claims, **characterized in that** it comprises means (12) for fixing the angular position of said concave region (10) with respect to said rotary joint (11).

6. The fixture according to one or more of the preceding claims, **characterized in that** said means for fixing the angular position comprise an L-shaped element (12) that is rigidly coupled to said concave region (10) and can engage the fixed part (13) of said rotary joint by means of a positioning bolt (14).

7. The fixture according to one or more of the preceding claims, **characterized in that** said concave region (10) comprises a front plate (15) and a rear plate (16) that are spaced one another and have a plurality of positioning holes (17) for inserting an initial locking bolt (18) in order to retain said die (20) in the initial steps of connection to the fixture.

8. The fixture according to one or more of the preceding claims, **characterized in that** it comprises, between said pair of rollers (21) having a fixed axis, a rubber roller (22) that is connected to a front actuation shank (23) and provides said means for turning said die (20) about its own axis.

9. The fixture according to one or more of the preceding claims, **characterized in that** it comprises, laterally to said fixed-axis rollers (23), a plurality of movable rollers (24) that can slide in vertical slots (25) formed by said plates (15, 16).

10. The fixture according to one or more of the preceding claims, **characterized in that** it comprises compensation springs (26) that act on said movable rollers (24) that can engage the peripheral region of said die (20), means (27) being further provided for the removable locking of said movable rollers (24).

11. The fixture according to one or more of the preceding claims, **characterized in that** it comprises, in the lower part of said concave region (10), lateral lugs (31) to which said arms (30) for preventing tipping are pivoted.

12. The fixture according to one or more of the preceding claims, **characterized in that** said arms (30) for preventing tipping comprise a front arm (31a) and a rear arm (31b) that are connected by cross-members (32) that support rollers (33) for engaging the front faces of said die (20).

13. The fixture according to one or more of the preceding claims, **characterized in that** it comprises, on said cross-members (32), slots (34) for positioning said engagement rollers (33) according to the thickness of said die (20).

14. The fixture according to one or more of the preceding claims, **characterized in that** it comprises an angular portion (35) that is connected to the ends of said arms (30) for preventing tipping proximate to their pivoting point, said angular portion (35) supporting a fixing bolt (36) that can engage a positioning slot (37) that is formed monolithically with said concave region (10).
